# EUROPEAN PATENT APPLICATION

(11) **EP 1 745 907 A2**
(43) Date of publication of application: **24.01.2007**
(21) Application number: 06425444.4
(22) Date of filing: 28.06.2006
(51) Int. Cl.: B29B 7/90, B29B 9/12, B29B 17/00, C08J 3/12

(54) **Production process of thermoplastic polymer granules for industrial use**

(30) Priority: 19.07.2005 IT MC20050068
(71) Applicant: Goldenplast S.p.A., 62016 Potenza Picena, MC (IT)
(72) Inventor: Perozzi, Gianni, 62012 Civitanova Marche (MC) (IT)
(74) Representative: Baldi, Claudio

(57) **Abstract**

The present invention refers to a production process of thermoplastic elastomeric polymer granules composed of a mix formed of one thermoplastic elastomeric polymer and at least one thermoplastic copolymer with the addition of one thermosetting elastomeric polymer.

## Description

The present patent application refers to a production process of thermoplastic polymer granules for industrial use.

The patent protection is also extended to the granular material obtained with the process of the invention.

The advantages of the new process of the invention will become more evident following to a brief examination of the prior technique and its specific disadvantages.

As it is known, the use of thermoplastic elastomeric polymers is diffused in many industrial sectors, in which the said polymers are subjected to moulding in order to obtain manufactured pieces of different types and for different uses.

Also thermosetting elastomeric polymers are used in moulding processes designed to manufacture specific products, such as car or motorcycle tyres.

The large diffusion of products manufactured with the said elastomeric polymers has caused an environmental problem.

The said problem refers to the identification of the adequate handling modes of the products manufactured with the said materials at the end of the life cycle when they need to be disposed of.

Obviously, among the different possibilities, recycling has been immediately identified as the most advantageous one.

However, it must be noted that only products moulded with thermoplastic elastomeric materials can be recycled completely and efficiently, being such a possibility basically ruled out in case of products moulded with thermosetting elastomeric polymers.

In view of the above, moulded thermosetting elastomeric polymers cannot be recycled and reused in similar moulding processes.

Some alternative solutions have been attempted, such as for example the possibility of grinding "worn out" products obtained from thermosetting elastomeric polymers (such as tyres) and assign them to suitable incineration/special waste centres or use them for alternative applications.

To give an example, the articles that are manufactured with thermosetting elastomeric polymers are subject to grinding in order to chop them into minute granules, i.e. a sort of dust, that can be used as surface filling material for synthetic turf.

However, this sort of "secondary" use of thermosetting elastomeric polymers is basically disappearing with time.

This is because of the several practical inconveniences that impair synthetic turf in which a layer of minute residues of thermosetting elastomeric polymers is used as filling material.

In particular, due to the use of the said filling material, the surface of synthetic turf is so compact, hard and abrasive that it can endanger the safety of athletes.The renunciation to this possible "secondary" use of products manufactured with thermosetting elastomeric polymers aggravates the issue of the environmental-friendly handling of these type of products at the end of their life cycle.

The purpose of the present invention is to devise a production process of thermoplastic elastomeric polymer granules that, in addition to be suitable for all industrial uses in traditional moulding processes, are also advantageous in terms of recycling of "worn out" products made of thermosetting elastomeric polymers.

More precisely, the present invention is based on the addition to the thermoplastic elastomeric polymers used to obtain the said granules of a very thin dust (with micron-size granulometry) of thermosetting elastomeric polymers obtained by finely grinding the "worn out" products.

In fact, it has been experimentally verified that the addition of thermosetting elastomeric polymer dust does not produce negative effects on thermoplastic elastomeric polymers. For this reason, from the functional viewpoint, the granules obtained with the process of the invention are completely equivalent to traditional granules of thermoplastic elastomeric polymers without the said addition.

This means that the granules obtained with the process of the invention can be used to manufacture products equal to traditional (i.e. obtained with pure thermoplastic elastomeric polymers) products in terms of deformability, recovery of deformability, absorbing power, drainage properties, surface wear and anallergic properties.

Moreover, it must be noted that the advantages of the present invention are not limited to the simple introduction of the said innovative and advantageous form of recycling for thermosetting polymers.

In fact, it must be noted that the addition of thin thermosetting elastomeric polymer dust results in the fact that, with the same size distribution, the granules obtained with the process of the invention incorporate a lower quantity of thermoplastic polymers compared to traditional granules without the said addition.

This allows to save on the cost of the main raw material (i.e. thermoplastic elastomeric polymers) and produce granules with lower weight because the addition of the dust can replace traditional mineral loads, such as silicates or carbonates, which have a higher relative density than thermosetting elastomeric polymers.

Additionally, the granules obtained by adding the aforementioned dust of thermosetting elastomeric polymers to the thermoplastic elastomeric polymers can be advantageously subjected to multiple moulding processes.

In fact, the granules can be used during the first process to transform them from raw material into finished products, and also during the recycling of the "worn out" product that was initially obtained with the same granules with the addition of thermosetting elastomeric polymer dust.

To better illustrate the idea of the present invention, reference is made to the traditional recycling technology designed to obtain traditional thermoplastic elastomeric polymer granules.

It must be noted that the "worn out" product made of thermoplastic elastomeric material is ground and its particles are subjected to a high-temperature plasticization process in suitable extruders; successively, they develop suitable elastic properties during cooling.

The product obtained from the extruders is then cut with suitable drawing dies to obtain the traditional granules that develop elastic properties during cooling and are designed to be used again (as raw material) in new moulding processes.

Within the traditional technology, the present invention is characterised by the fact that the thermoplastic elastomeric polymer used to obtain the extruded products (i.e. semi-finished products) is mixed with thermosetting elastomeric polymer dust before being subjected to plasticization processes by extrusion.

This means that, within the present invention, the extruded products obtained from the plasticization processes are manufactured with the said mix of thermoplastic and thermosetting elastomeric polymers, and therefore the said semi-finished products only need to be ground to obtain the desired granules for industrial use.

Additional specifications of the present invention refer to the indication of the thermoplastic and thermosetting elastomeric polymers to be used, as well as to the execution modes of the different steps of the process.

Thermoplastic elastomeric polymers are selected from hydrogenated or non-hydrogenated stirenic block copolymers (SBC).

The following groups are selected from the hydrogenated ones:
- SEBS ( Styrene-Ethylene-Butylene-Styrene)
- SEPS ( Styrene-Ethylene-Propylene-Styrene)
- SEEPS (Styrene-Ethylene-Ethylene-Propylene-Styrene)

The following groups are selected from the non-hydrogenated ones:
- SBS (Styrene-Butadiene-Styrene)
- SIS (Styrene-Isoprene-Styrene)

Thermosetting elastomeric polymers are selected from the vulcanized SBR (styrene-butadiene-rubber) family or from the PU (polyurethane) family which has acquired thermosetting properties after a polymerization process.

In addition to the mix of thermoplastic elastomeric polymers and thermosetting elastomeric polymer dust, the granules of the invention comprise at least one thermoplastic copolymer preferably selected from the following groups:
- Polypropylenes (PP)
- Polyethylenes
- Ethylene-Vinyl acetate (EVA)
- Ethyl-Butyl acetate (EBA)
With regard to the specific implementation modes of the process of the invention, it must be noted that the thermoplastic elastomeric polymer and the said thermosetting elastomeric polymer "dust" are cold mixed with a blade mixer, preferably of known type such as Turbo-Mix, in which all the ingredients are loaded.

In particular, the ingredients of the first, traditional mixing consist in:
- thermoplastic elastomeric polymers of the aforementioned groups in combination with copolymers of the aforementioned groups, with weight preferably ranging from 10 and 25% with respect to the total weight of the product to be obtained
- paraffin plasticizing oil with weight preferably ranging from 10 and 30% with respect to the total weight of the product to be obtained
- calcium carbonate with weight preferably ranging from 30 and 50% with respect to the total weight of the product to be obtained

In particular, during the first traditional mixing, the ingredients are mixed until the oil is completely absorbed by the thermoplastic elastomeric polymer.

According to the present invention, during the second mixing, the mix obtained at the end of the first mixing is additionally mixed with:
- one thermoplastic elastomeric polymers of the aforementioned groups in micronised state (with size distribution preferably not higher than 0.7 mm) with weight not higher than 50% with respect to the total weight of the product to be obtained
   The lower is the size distribution of the dust, the higher is the percentage value; for instance, percentage is preferably 24% with 0.7 size distribution.
   Additives of different type can be traditionally added in the second mixing, such as
   colouring agents, anti-oxidants, expanding agents, etc.

Of course, the second mixing is performed until the thermosetting micronised polymer is perfectly blended with the mix obtained at the end of the first mixing.

Once the mix composed of one thermoplastic elastomeric polymer and the thermosetting elastomeric polymer dust has been completed, with at least one thermoplastic copolymer, the mix is placed in a hopper that will take it to a traditional extruder used for hot-plasticization and drawing.

Successively, traditional grinding is performed in order to obtain the aforementioned granules with the addition provided by the present invention.

## Claims

1. Production process of thermoplastic elastomeric polymers, of the type comprising the following sequence of operations:
a) preparation and cold-mixing of a mix composed of:
- thermoplastic elastomeric polymers and thermoplastic copolymers
- paraffin plasticizing oil
- calcium carbonate
b) pouring of the blended mix into the hopper of an extruder used for hot-plasticization
c) fine grinding of the product obtained from the extruder;
process **characterised in that**, after operation a) and before operation b), the mix is additionally mixed with thermosetting elastomeric polymer dust, and the obtained mix is cold-mixed until perfectly blended.

2. Production process of thermoplastic elastomeric polymer granules as defined in the preceding claim, **characterised in that** the thermosetting elastomeric polymer dust has a size distribution not higher than 0.7 and a weight not higher than 50% with respect to the total weight of the product to be obtained.

3. Process as defined in one of the preceding claims, **characterised in that** the thermosetting elastomeric polymer dust is added to the mix obtained at the end of operation a) in combination with additives, such as colouring agents, anti-oxidants, expanding agents or other additives of different type according to the specific needs.

4. Process as defined in claim 1, **characterised in that** the thermoplastic elastomeric polymers used in operation a) are selected from stirenic block copolymers (SBC).

5. Process as defined in the preceding claim, **characterised in that** the thermoplastic elastomeric polymers used in operation a) are selected from the following groups:
- SEBS ( Styrene-Ethylene-Butylene-Styrene)
- SEPS ( Styrene-Ethylene-Propylene-Styrene)
- SEEPS (Styrene-Ethylene-Ethylene-Propylene-Styrene)
- SBS (Styrene-Butadiene-Styrene)
- SIS (Styrene-Isoprene-Styrene)

6. Process as defined in claim 1, **characterised in that** the thermosetting elastomeric polymers used in dust form in operation b) are selected from the vulcanized SBR (styrene-butadiene-rubber) family or from the PU (polyurethane) family which has acquired thermosetting properties after a polymerization process.

7. Process as defined in claim 1, **characterised in that** the thermoplastic copolymers used in operation a) are selected from the following groups:
- - Polypropylenes (PP)
- - Polyethylenes
- - Ethylene-Vinyl acetate (EVA)
- - Ethyl-Butyl acetate (EBA)

8. Thermoplastic polymer granules **characterised in that** they are obtained with the process defined in the preceding claims.
